# EUROPEAN PATENT SPECIFICATION

(11) **EP 4 506 931 B1**
(45) Date of publication and mention of the grant of the patent: **29.07.2026**
(21) Application number: 24730515.4
(22) Date of filing: 11.06.2024
(51) Int. Cl.: G06F 1/3234, G09G 3/20, G06F 3/041, G06F 1/16, H04M 1/02, H04W 52/02

(54) **ELECTRONIC DEVICE FOR DETECTING MALFUNCTION BY USING ILLUMINATION SENSOR, AND CONTROL METHOD THEREFOR**
ELEKTRONISCHE VORRICHTUNG ZUR ERKENNUNG EINER FEHLFUNKTION UNTER VERWENDUNG EINES BELEUCHTUNGSSENSORS UND STEUERUNGSVERFAHREN DAFÜR
DISPOSITIF ÉLECTRONIQUE POUR DÉTECTER UN DYSFONCTIONNEMENT À L'AIDE D'UN CAPTEUR D'ÉCLAIRAGE, ET PROCÉDÉ DE COMMANDE ASSOCIÉ

(30) Priority: 12.06.2023 KR 20230074615; 20.07.2023 KR 20230094742
(43) Date of publication of application: 12.02.2025
(73) Proprietor: Samsung Electronics Co., Ltd., Suwon-si, Gyeonggi-do 16677 (KR)
(72) Inventor: WOO, Jonghoon, Suwon-si, Gyeonggi-do 16677 (KR); KIM, Yongwoon, Suwon-si, Gyeonggi-do 16677 (KR); PARK, Eunsoo, Suwon-si, Gyeonggi-do 16677 (KR); AN, Jinwan, Suwon-si, Gyeonggi-do 16677 (KR); HAN, Yonggil, Suwon-si, Gyeonggi-do 16677 (KR)
(74) Representative: Appleyard Lees IP LLP
(86) International application number: PCT/KR2024/007946
(87) International publication number: WO 2024/258142

(56) References cited:
- EP-A1- 3 920 008
- KR-A- 20110 043 492
- KR-A- 20130 099 696
- KR-A- 20180 109 626
- KR-A- 20210 157 711
- KR-A- 20220 121 712
- US-A1- 2016 320 907
- US-A1- 2020 022 239

## Description

### Technical Field

This disclosure relates to electronic devices and method for controlling the same. In particular the disclosure relates to electronic devices for detecting malfunction using an illuminance sensor, and to methods of controlling the same.

### Background Art

More and more services and additional functions have been provided through electronic devices, for example, portable electronic devices such as smart phones. To increase the utility value of these electronic devices and satisfy the needs of various users, communication service providers or electronic device manufacturers are competitively developing electronic devices to provide various functions, and to differentiate themselves from other companies. Accordingly, the various functions provided through electronic devices have become more sophisticated.

In recent years, as the integration level of electronic devices increases and high-speed, large-capacity wireless communication becomes more common, a single electronic device such as a mobile communication terminal may be equipped with various functions. For example, in addition to a communication function, an entertainment function such as the ability to run games, a multimedia function such as the ability to play back music/video, a secure functions such as mobile banking, and other functions such as calendar/schedule management or an electronic wallet are integrated into a single electronic device. These electronic devices are being miniaturized so that users may conveniently carry them.

As mobile communication services expand into the area of multimedia services, the size of display in electronic devices may increase so that a user is may fully use multimedia services as well as voice calls and short messages. Accordingly, a flexible display may be disposed on the entire area of a housing structure that is separated to enable folding. Background art includes patent publications US2016320907, EP3920008, KR20130099696, KR20180109626 , KR20210157711 and KR20220121712 .

### Disclosure of Invention

### Solution to Problems

According to an embodiment, an electronic device is provided, as set out in accompanying claim 1.

According to an embodiment, a method of controlling an electronic device is provided, as set out in accompanying claim 9.

According to an embodiment, an electronic apparatus and method of controlling an electronic device are provided, as set out in the accompanying claims.

### Brief Description of Drawings

FIG. 1 is a block diagram illustrating an electronic device in a network environment.
FIG. 2A is an exemplary diagram illustrating an electronic device (e.g., an electronic device 101 in FIG. 1) in an unfolded state.
FIG. 2B is an exemplary diagram illustrating the electronic device of FIG. 2A in a folded state.
FIG. 2C is an exemplary diagram illustrating an electronic device in a folded state.
FIG. 3 is a flowchart illustrating a malfunction detection operation of an electronic device.
FIG. 4A is a diagram illustrating an arrangement structure of an illuminance sensor in an electronic device.
FIG. 4B is a diagram illustrating an arrangement structure of an illuminance sensor in an electronic device.
FIG. 5 is a diagram illustrating an arrangement structure of an illuminance sensor in an electronic device.
FIG. 6 is a diagram illustrating an operation of detecting a malfunction by displaying a visible light pattern in an electronic device.
FIG. 7A is a diagram illustrating a drive cycle of an illuminance sensor in an electronic device.
FIG. 7B is a diagram illustrating a sensing operation of an illuminance sensor in an electronic device.
FIG. 8A is a diagram illustrating a visible light pattern in an electronic device.
FIG. 8B is a diagram illustrating a visible light pattern in an electronic device.
FIG. 9A is a diagram illustrating an operation of controlling a drive cycle of an illuminance sensor based on the shape of a visible light pattern in an electronic device.
FIG. 9B is a diagram illustrating an operation of controlling a drive cycle of an illuminance sensor based on the shape of a visible light pattern in an electronic device.
FIG. 10 is a diagram illustrating the shape of a visible light pattern in an electronic device.
FIG. 11A is a diagram illustrating the amount of reflected light detected in an external space of an electronic device.
FIG. 11B is a diagram illustrating the amount of reflected light detected in an electronic device which is within a pocket.

### Mode for the Invention

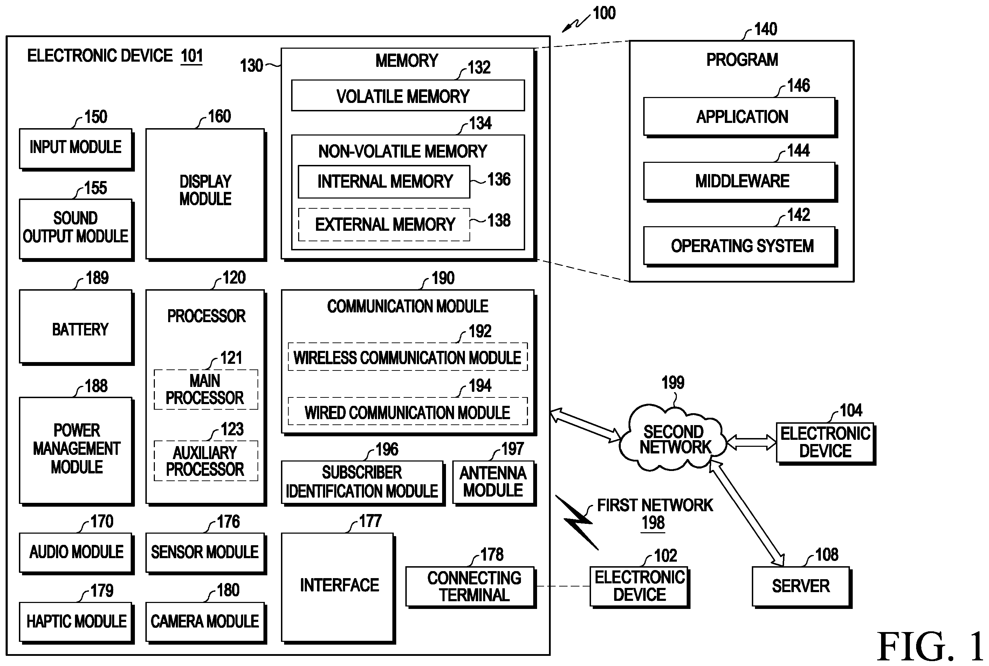

FIG. 1 is a block diagram illustrating an electronic device 101 in a network environment 100 according to embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an ISP or a CP) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, ISPs, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., the application processor (AP)) and supports a direct (e.g., wired) communication or a wireless communication.

According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beamforming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to some embodiments, another component (e.g., a radio frequency integrated circuit (RFIC)) other than the radiating element may be additionally formed as part of the antenna module 197.

According to an embodiment, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or loT-related technology.

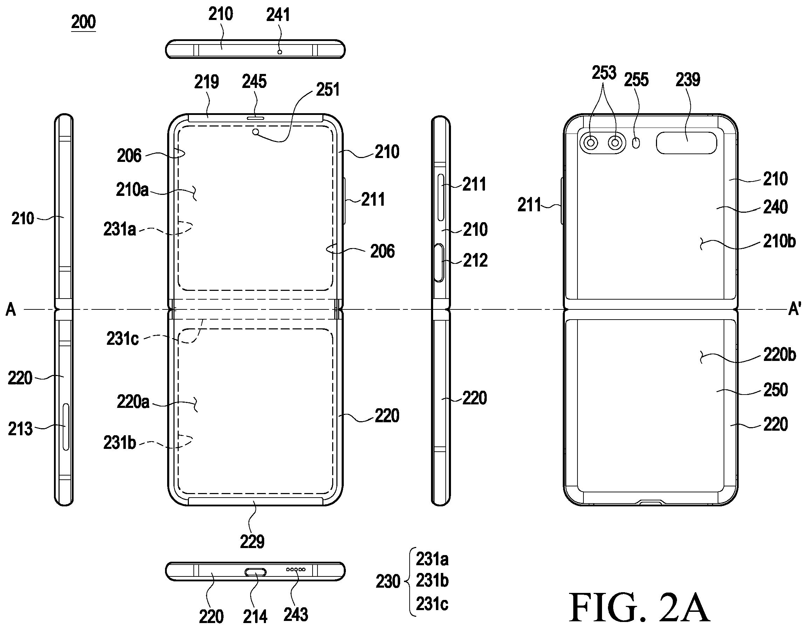

FIG. 2A is an exemplary diagram illustrating a foldable electronic device 200 in an unfolded state.

Referring to FIG. 2A, the electronic device 200 is a foldable type which is foldable or un-foldable, and include a first housing 210, a second housing 220, and a flexible or foldable display 230 (hereinafter, referred to shortly as a "display 230") (e.g., the display module 160 in FIG. 1) disposed in a space provided by the first housing 210 and the second housing 220.

A surface on which the display 230 is disposed is defined as a front surface of the foldable device 200. At least a portion of the front surface of the foldable device 200 is formed of a substantially transparent front plate (e.g., a glass or polymer plate including various coating layers). A surface opposite to the front surface is defined as a rear surface of the foldable device 200. The rear surface of the foldable device 200 is formed by a substantially opaque rear plate (hereinafter, referred to as a "rear cover"). The rear cover may be formed, for example, of coated or tinted glass, ceramic, a polymer, a metal (e.g., aluminum, stainless steel (STS), or magnesium), or a combination of at least two of these materials. Further, a surface surrounding a space between the front surface and the rear surface is defined as a side surface of the foldable device 200. The side surface is formed by a side bezel structure (or a "side member") which is coupled to the front plate and the rear cover, and may be formed as a metal and/or a polymer component or collection of such components. In some example devices, the rear cover and the side bezel structure may be integrally formed and include the same material (e.g., a metallic material such as aluminum).

The foldable device 200 includes at least one of each of: the display 230, a microphone hole 241, speaker holes 243 and 245, a sensor module 255, a camera module 253, and key input devices 211, 212, and 213, or a connector hole 214. However, in other example embodiments, the foldable device 200 is not be provided with at least one of these components (e.g., the key input devices 211, 212, and 213), or may additionally include other components (e.g., a light emitting element).

The display 230 is a display of which at least a partial area is transformable into a flat or curved surface. The display 230 includes a folding area 231c, a first area 231a disposed on one side of the folding area 231c (e.g., above the folding area 231c illustrated in FIG. 2A), and a second area 231b disposed on the other side of the folding area 231c (e.g., below the folding area 231c illustrated in FIG. 2A). However, the division of the areas of the display 230 illustrated in FIG. 2A is an example, and the display 230 may be divided into a plurality of areas (e.g., four or more areas or two areas) depending on its structure or function. For example, the display 230 may be divided into areas by the folding area 231c or a folding axis A in the embodiment illustrated in FIG. 2A, whereas the display 230 may be divided into areas by a different folding area 231c or a different folding axis (e.g., a folding axis perpendicular to the folding axis A) in another embodiment.

A microphone for obtaining an external sound is disposed inside the microphone hole 241, and in some embodiments, a plurality of microphones may be disposed to detect the direction of a sound. The speaker holes 243 and 245 may include an external speaker hole 243 and a receiver hole 245 for calls. In some embodiments, the speaker holes 243 and 245 and the microphone hole 241 may be implemented as one hole, or a speaker (e.g., a piezo speaker) may be included without the speaker holes 243 and 245. The positions and numbers of microphone holes 241 and speaker holes 243 and 245 may be varied from that shown, in other embodiments.

The camera module 253 includes a first camera device 251 disposed on a first surface 210a of the first housing 210, and a second camera device 253 disposed on a second surface 210b of the first housing 210, in the foldable device 200. The foldable device 200 may further include a flash (not shown). The camera devices 251 and 253 may include one or more lenses, an image sensor, and/or an ISP. The flash (not shown) may include, for example, a light emitting diode (LED) or a xenon lamp.

The sensor module 255 is configured to generate an electrical signal or data value corresponding to an internal operating state of the foldable device 200 or an external environmental state. While not shown in the drawings, the foldable device 200 may include another sensor module (e.g., the sensor module 176 in FIG. 1) additionally or alternatively to the sensor module 255 provided on the second surface 210b of the first housing 210. The foldable device 200 may include, as a sensor module, for example, at least one of a proximity sensor, a fingerprint sensor, a hear rate monitor (HRM) sensor, a gesture sensor, a gyro sensor, an atmospheric pressure sensor, a magnetic sensor, an acceleration sensor, a grip sensor, a color sensor, an IR sensor, a biometric sensor, a temperature sensor, a humidity sensor, an angle sensor, or an illuminance sensor. When the foldable device 200 is in the folded state, the foldable device 200 according to an embodiment of the disclosure may distinguish an upper surface and a lower surface thereof from each other using data obtained by the gyro sensor. For example, when data obtained by the gyro sensor is substantially changed from data at a specific time point, the foldable device 200 according to an embodiment of the disclosure may determine that a surface on which the gyro sensor is provided is the upper surface. On the contrary, when the data obtained by the gyro sensor is not substantially changed from the data at the specific time point, the foldable device 200 according to an embodiment of the disclosure may determine that the surface on which the gyro sensor is provided is the lower surface. The foldable device 200 according to an embodiment of the disclosure may determine an angle at which the foldable device 200 is folded through an angle sensor disposed around the folding axis A. Various techniques for determining the angle at which the foldable device 200 is folded may be applied in other embodiments.

The key input devices 211, 212, and 213 are disposed on side surfaces of a foldable housing (e.g., the first housing 210 or the second housing 220). In other embodiments, the foldable device 200 may not include some or any of the above-mentioned key input devices 211, 212, and 213, and the key input devices not included may be implemented in other forms such as soft keys on the display 230. In some embodiments, a key input device may be configured such that a key input is implemented by a sensor module (e.g., a gesture sensor).

The connector hole 214 may be configured to accommodate a connector (e.g., a USB connector) for transmitting and receiving power and/or data to and from an external electronic device, or additionally or alternatively, a connector for transmitting and receiving audio signals to and from an external electronic device.

A foldable housing may be implemented by combining the first housing 210, the second housing 220, a first rear cover 240, a second rear cover 250, and a hinge module. The foldable housing of the foldable device 200 may be implemented in other shapes or combinations and/or coupling of components, with other embodiments not limited to the shape and combination illustrated in FIG. 2A. For example, in another embodiment, the first housing 210 and the first rear cover 240 may be formed integrally, and the second housing 220 and the second rear cover 250 may be formed integrally. That is, a 'housing' may mean a combination and/or combined configuration of various other components not mentioned. For example, the first area 231a of the display 230 may be described as forming one surface of the first housing 210, and in another embodiment, the first area 231a of the display 230 may be described as disposed on or attached to one surface of the first housing 210.

The first housing 210 is connected to a hinge structure, and includes the first surface 210a facing in a first direction and the second surface 210b facing in a second direction opposite to the first direction. The second housing 220 is connected to the hinge structure, includes a third surface 220a facing in a third direction and a fourth surface 220b facing in a fourth direction opposite to the third direction, and rotates or pivots around the hinge structure (or the folding axis A) with respect to the first housing 210.

The first housing 210 and the second housing 220 are disposed on both sides (or upper/lower sides) of the folding axis A and have an symmetrical shape as a whole with respect to the folding axis A. The angle or distance between the first housing 210 and the second housing 220 varies depending on whether the foldable device 200 is in the unfolded state, the folded state, or a partially unfolded (or partially folded) intermediate state. Although the first housing 210 includes various additional sensors as compared to the second housing 220, the first housing 210 and the second housing 220 have a mutually symmetrical shape in other areas.

At least a portion of the first housing 210 and the second housing 220 may be formed of a metallic or non-metallic material having a level of rigidity selected to support the display 230. At least a portion formed of the metallic material may be provided as a ground plane or radiating conductor of the foldable device 200, and when provided as the ground plane, may be electrically connected to a ground line formed on a PCB.

The first rear cover 240 is disposed on one side (e.g., the upper side in FIG. 2A) of the folding axis A on the rear surface of the foldable device 200, and for example, has a substantially rectangular periphery, which is surrounded by the first housing 210 (and/or the side bezel structure). Similarly, the second rear cover 250 is disposed on the other side (e.g., the lower side in FIG. 2A) of the folding axis A on the rear surface of the foldable device 200, and has a periphery surrounded by the second housing 220 (and/or the side bezel structure).

According to an embodiment of the disclosure, the first rear cover 240 and the second rear cover 250 have a substantially symmetrical shape with respect to the folding axis A. However, the first rear cover 240 and the second rear cover 250 do not necessarily have to have the mutually symmetrical shape, and in another embodiment the foldable device 200 may have the first rear cover 240 and the second rear cover 250 in different shapes from those shown, and/or from each other. For example, the first rear cover 240 may be formed integrally with the first housing 210, and the second rear cover 250 may be formed integrally with the second housing 220.

The first rear cover 240, the second rear cover 250, the first housing 210, and the second housing 220 form a space in which various components of the foldable device 200 may be disposed. One or more components may be disposed or visually exposed on the rear surface of the foldable device 200. For example, at least a portion of a sub-display 239 is visually exposed through the first rear cover 240. In another embodiment, one or more components or sensors may be visually exposed through the first rear cover 240. In various embodiments, the components or sensors may include a proximity sensor, a rear camera, and/or a flash. In addition, while not shown separately in the drawings, one or more components or sensors may be visually exposed through the second rear cover 250.

The front camera 251 exposed on the front surface of the foldable device 200 through one or more openings or the rear camera 253 exposed through the first rear cover 240 may include one or more lenses, an image sensor, and/or an ISP. The flash (not shown) may include, for example, a light emitting diode (LED) or a xenon lamp. In some embodiments, two or more lenses (an IR camera, a wide-angle lens, and a telephoto lens) and image sensors may be disposed on one surface of the foldable device 200.

The foldable device 200 may switch between the folded state and the unfolded state, and vice versa.

For example, the first housing 210 and the second housing 220 pivot relative to each other between a first position at which they face each other and a second position at which they are unfolded at a specified angle from the first position (e.g., the state illustrated in FIG. 2A). The first housing 210 and the second housing 220 are shown as unfolded at an angle of approximately 180 degrees in FIG. 2A, and the first area 231a and the second area 231b of the display 230 may be positioned to face each other in the folded state, for example, at the first position, with the folding area 231c transformed into a curved shape.

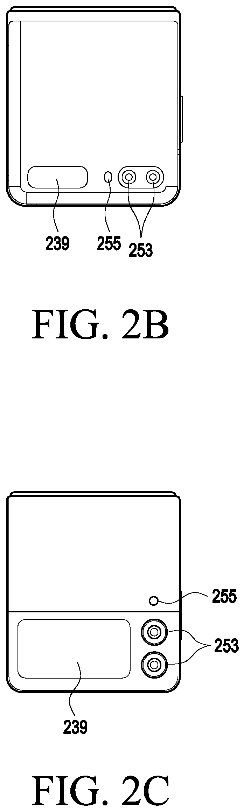

The foldable device 200 may be implemented in two ways: 'in-folding' in which the first area 231a and the second area 231b are folded to face each other, and 'out-folding' in which the first area 231a and the second area 231b are folded to face opposite directions. For example, the first area 231a and the second area 231b may be substantially hidden in a folded-in state, and arranged to face substantially the same direction in a fully unfolded state. For example, the first area 231a and the second area 231b may be arranged to face opposite directions and exposed to the outside in a folded-out state, and arranged to face substantially the same direction in the fully unfolded state. Such folded states will be described below with reference to FIGS. 2B and 2C.

The display 230 includes a display panel, and a window member, one or both of which is be formed of a flexible material. While not shown separately, those skilled in the art will readily understand that the display 230 or the display panel includes various components such as a light emitting layer, substrate(s) encapsulating the light emitting layer, an electrode or wiring layer, and/or adhesive layer(s) bonding different adjacent layers. When the display 230 (e.g., the folding area 231c) is transformed from a flat shape to a curved shape, relative displacement may occur between layers forming the display 230. The relative displacement caused by the deformation of the display 230 may increase at or to a point or line farther from the folding axis A and/or with a greater thickness of the display 230.

The window member may serve as a protection film to protect the display panel. As the protection film, a thin-film plate is used, of a material which protects the display panel from external shock, is resistant to scratches, and reduces wrinkles in the folding area 231c even during repeated folding and unfolding of the housings 210 and 220. For example, the material of the thin-film plate may include a clear polyimide (CPI) film or ultra-thin glass (UTG).

The foldable device 200 further includes protective member(s) 206 or decorative cover(s) 219 and 229 disposed on at least a portion of an edge of the display 230 on the front surface (e.g., the first surface 210a or the third surface 220a). The protection member 206 or the decorative covers 219 and 229 prevent at least a portion of the edge of the display 230 from contacting a mechanical structure (e.g., the first housing 210 or the second housing 220) and provide a decorative effect to the exterior of the foldable device 200.

FIG. 2B is an exemplary diagram illustrating the foldable device of FIG. 2A in a folded state. FIG. 2B illustrates the folded-in state.

Referring to FIG. 2B, the electronic device (e.g., the electronic device 101 in FIG. 1 or the foldable device 200 in FIG. 2A) may switch from the unfolded state illustrated in FIG. 2A to the folded state.

When the electronic device is folded-in, the first area (e.g., the first area 231a in FIG. 2A) and the second area (e.g., the second area 231b in FIG. 2A) of the flexible display (e.g., the display module 160 in FIG. 1) are folded to face each other and be substantially hidden from outside the electronic device.

The first rear cover (e.g., the first rear cover 240 in FIG. 2A) and the second rear cover (e.g., the second rear cover 250 in FIG. 2A) are arranged to face the same direction in the unfolded state, and are disposed to face opposite directions and be exposed to the outside in the folded state.

In the folded state, one or more components may be disposed on or visually exposed through the first rear cover (or the second rear cover). For example, in the folded state, at least a portion of the sub-display 239, the sensor module 255 (e.g., a proximity sensor), the rear camera 253, and/or the flash may be visually exposed through the first rear cover (or the second rear cover).

In the folded state, the electronic device is configured to provide content through the sub-display 239. For example, the content may include a standby screen or an application execution screen. For example, the standby screen may include date information, time information, battery charge information, and/or notification information such as event occurrence.

The shape and/or size of the sub-display 239 and the type, size, and/or arrangement of the sub-display 239, the sensor module 255, and/or the rear camera 253 may be varied in other embodiments, as illustrated in FIG. 2C.

FIG. 2C is an exemplary diagram illustrating a foldable device in a folded state.

Referring to FIG. 2C, the rear camera 253 is disposed vertically, which is different from in FIG. 2A, the sub-display 239 has a greater longitudinal length than in FIG. 2A, and the sensor module 255 is disposed above the rear camera 253, which is different compared to FIG. 2A in which the sensor module 255 is disposed between the sub-display 239 and the rear camera 253.

The types, shapes, sizes, and/or arrangements of the sub-display 239, the sensor module 255, and the rear camera 253 in FIGS. 2B and 2C are merely exemplary. For example, the sub-display 239 may have a circular or square shape, although it has a rectangular shape with rounded corners in FIGS. 2B and 2C.

The type and/or number of at least one component visually exposed through the rear cover (e.g., the first rear cover or the second rear cover) is not limited to the examples of FIGS. 2B and 2C.

While the electronic device is shown and described as being folded in the 'in-folding' manner in FIGS. 2B and 2C, it may also be folded in an 'out-folding' manner. When folded in the 'out-folding' manner, one of the first area (e.g., the first area 231a in FIG. 2A) and the second area (e.g., the second area 231b in FIG. 2A) of the flexible display (e.g., the display module 160 in FIG. 1) exposed to the outside may be the sub-display 239.

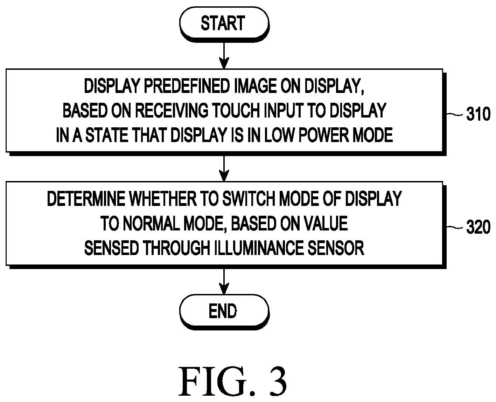

FIG. 3 is a flowchart illustrating a malfunction detection operation in an electronic device.

Referring to FIG. 3, in operation 310, the electronic device (e.g., the electronic device 101 in FIG. 1, the processor 120 in FIG. 1, or the electronic device 200 in FIG. 2A) is configured to display a predefined image based on receiving a touch input to a display (e.g., the display module 160 in FIG. 1, the sub-display 239 in FIG. 2A, the sub-display 239 in FIG. 2B, or the sub-display 239 in FIG. 2C), in a state that the display is in a low power mode (e.g., a power saving state or a sleep state).

The electronic device may be a foldable device. The display may be disposed in an area exposed to the outside, when the electronic device is in a fully folded state. For example, the display may be a sub-display (e.g., the sub-display 239 in FIG. 2A, the sub-display 239 in FIG. 2B, or the sub-display 239 in FIG. 2C) distinct from a flexible display (e.g., the display 230 in FIG. 2A) of a foldable device.

The display may have a driving frequency of 60Hz and a period of 16.6ms per frame. The display may perform repeated on/off operations within one frame, with a longer on period used to increase luminance represented by the display.

The display is touch-input enabled. When the electronic device is in the folded state, the display may execute one or more of a group of simple functions. For example, the display may perform at least one of displaying an object for music playback, displaying weather information, displaying a notification, or displaying a preview during use of a camera.

The electronic device includes an illuminance sensor (e.g., the sensor module 176 in FIG. 1, the sensor module 255 in FIG. 2A, the sensor module 255 in FIG. 2B, or the sensor module 255 in FIG. 2C). The illuminance sensor may be disposed in an area exposed to the outside, when the electronic device is in the fully folded state. For example, the illuminance sensor may be disposed around the display disposed in an area exposed to the outside, when the electronic device is in the folded state. The illuminance sensor may be disposed at a position where it is capable of receiving light from an image displayed on the display.

The illuminance sensor may be a flicker sensor that is ordinarily used to correct flickering effects caused by a camera, or flickering effects at, or in or of a camera.

For example, in order to correct flickering of the camera, the illuminance sensor may be disposed around the camera (e.g., the camera module 180 in FIG. 1, the camera module 253 in FIG. 2A, the rear camera 253 in FIG. 2B, or the rear camera 253 in FIG. 2C) disposed in an area exposed to the outside, when the electronic device is in the folded state.

The illuminance sensor may include a light receiver (e.g., a photodiode). The light receiver may arranged to receive a repeating pattern of RGB and Clear, and to receive light in the visible light part of the optical spectrum.

The electronic device may in some embodiments not include a proximity sensor due to limitations on the size and/or mounting space of the electronic device. For example, the electronic device may not include a sensor (e.g., a proximity sensor) with a light emitter (e.g., an LED) for proximity sensing. Alternatively, when the electronic device includes a sensor with a light emitter, the light emitter may be deactivated. In addition, or again alternatively, when the electronic device is a foldable device, the electronic device may not in some embodiments include a proximity sensor in the area that is exposed to the outside when the electronic device is in the folded state.

The electronic device may further include a housing (e.g., the first rear cover 240 in FIG. 2A). The illuminance sensor may be disposed below a hole of the housing. For example, the illuminance sensor may be exposed to the outside through the hole of the housing.

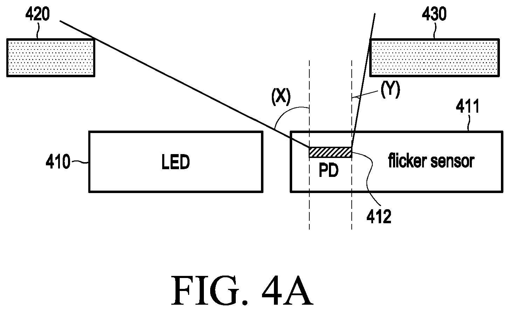

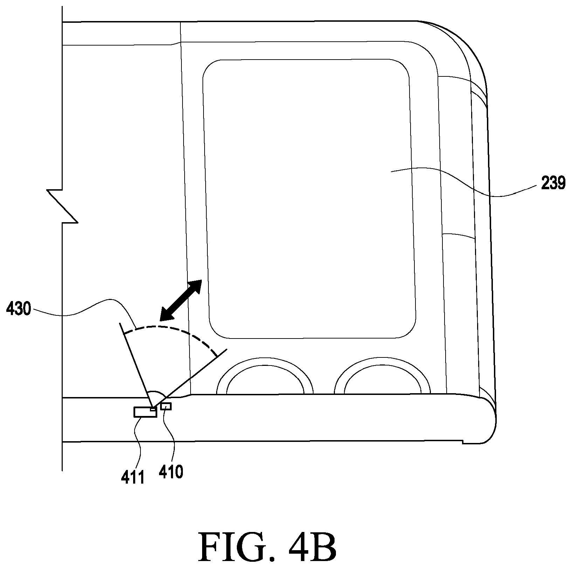

The illuminance sensor may be disposed at the center of the hole, in a direction opposite to a direction in which the display is disposed with respect to the hole. A field of view (FOV) in a desired direction may be obtained according to this arrangement structure of the illuminance sensor. The arrangement structure of the illuminance sensor will be described in more detail below with reference to FIGS. 4A and 4B.

A touch input to the display may include an input to switch from a low power mode (e.g., always on display (AOD) or a deactivated state in which the entire area of the display is turned off) to a normal mode. For example to make said switch to the normal mode, the touch input to the display may include a touch, a double tap, or a long press on the display. In the low power mode, the display may operate with only a partial area (e.g., a subset of the available pixels) of the display activated or operate with reduced brightness in order to reduce power consumption. The entire area of the display may be activated, and content may be displayed over the entire area of the display, in the normal mode.

The electronic device is arranged to identify whether a malfunction of the electronic device may occur, using an ambient light condition to prevent the display from turning on and malfunctioning, when an unintended input is received on the display in a pocket. For example, when the electronic device is a foldable device, the electronic device may identify whether a malfunction of the electronic device may occur using an ambient illuminance, as the display receives an input to activate the display in a fully unfolded state, a partially folded state, or a fully folded state in a pocket. According to an embodiment, when the electronic device is a non-foldable electronic device, such as bar type electronic device, the electronic device may identify whether a malfunction of the electronic device may occur using an ambient illuminance, when the display receives an input to activate the display. Here, the concept of malfunctioning is used to describe performing a function that is not intended or desired to be activated by a used, but which could potentially be interpreted as being intended or desired, based on an unintended input received on the display. Such unintended inputs may be interpreted as having occurred when there is a touch input on the display of the electronic device when the electronic device is in a pocket. Such touch inputs are referred to as "false inputs".

The electronic device may activate the illuminance sensor, based on receiving a touch input while the illuminance sensor is deactivated.

In operation 320, the electronic device determines whether to switch a mode of the display to the normal mode, based on a value sensed through the illuminance sensor after displaying the predefined image. The predefined image may be a visible light pattern. Hereinbelow, the predefined image may be referred to as a visible light pattern, to which the disclosure is not limited.

The electronic device may display the predefined image (e.g., the visible light pattern) in a single color or in two or more colors by changing the colors in a set order. According to an embodiment, the predetermined image may include a plurality of image frames having a specific pattern. For example, the visible light pattern may include at least one of white (W), red (R), green (G), or blue (B). For example, the visible light pattern may have colors in the order of white (W), red (R), green (G), and blue (B).

According to an embodiment, the visible light pattern may include a color obtained by combining two or more of white (W), red (R), green (G), and blue (B). For example, the visible light pattern may include yellow (Y) obtained by combining red and green, magenta (M) obtained by combining red and blue, or cyan (C) obtained by combining green and blue. For example, the visible light pattern may include colors in the order of white (W), yellow (Y), magenta (M), and cyan (C).

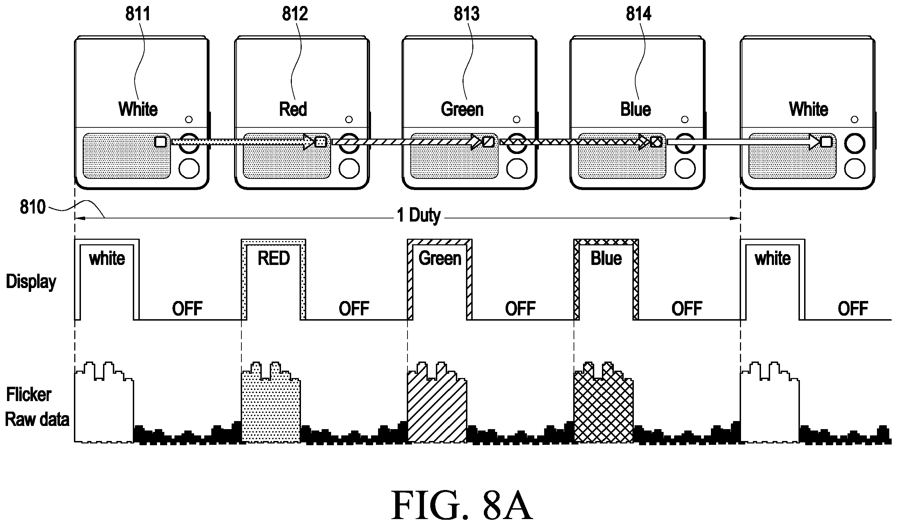

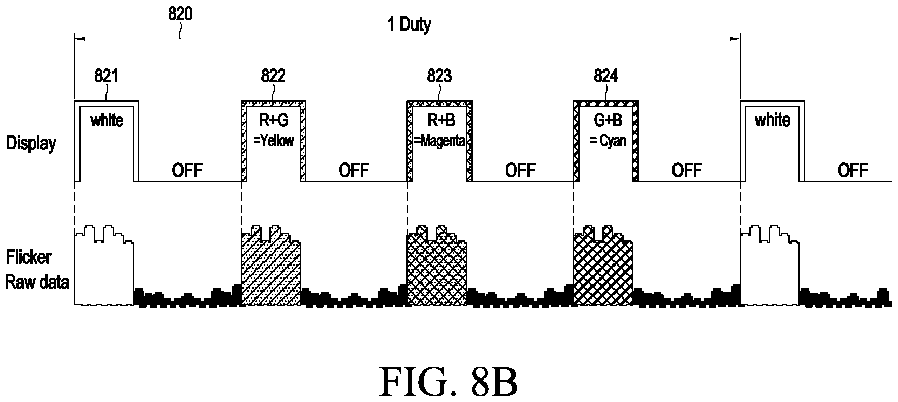

An example of the color sequence of the visible light pattern will be described in more detail below with reference to FIGS. 8A and 8B.

The electronic device determines whether to activate the entire area of the display to switch to the normal mode in response to the touch input, based on a value of the visible light pattern and a value sensed through the illuminance sensor after displaying the visible light pattern.

The electronic device senses reflected light of the predefined image (e.g., the visible light pattern) displayed on the display, using the illuminance sensor, and determines whether the electronic device is located in a pocket, based on the sensed value. For example, the electronic device may sense light of the visible light pattern displayed on the display, which is reflected by wrinkles or fabric of a pants pocket, or reflected light caused by crosstalk, through the illuminance sensor.

The electronic device may identify at least one of the magnitude or color of the value sensed through the illuminance sensor. The electronic device may determine whether to activate the entire area of the display in response to the input by comparing at least one of the luminance or color of the visible light pattern with at least one of the magnitude or color of the value sensed through the illuminance sensor. The electronic device may identify whether the electronic device is located in the pocket, using raw data sensed through the illuminance sensor.

The electronic device turns on the illuminance sensor, while the predefined image (e.g., the visible light pattern) is displayed on a portion of the display, and turn off the illuminance sensor, while the predefined image is not displayed on the portion of the display.

The electronic device may control an on period of the illuminance sensor, based on the location and shape of the visible light pattern. The electronic device may control an on/off frequency of the illuminance sensor by controlling the on period of the illuminance sensor and an off period of the illuminance sensor, based on the location and shape of the visible light pattern.

The electronic device may determine whether to activate the entire area of the display in response to the input, based on a difference between a baseline of a sensed value in the on period of the illuminance sensor and a baseline of a sensed value in the off period of the illuminance sensor.

When the touch input is deemed to be that which would cause a malfunction of the electronic device based on the value sensed through the illuminance sensor, the electronic device is configured ignore the touch input.

The electronic device may deactivate the entire area of the display, when the input deemed likely to cause a malfunction of the electronic device is received, and may activate the entire area of the display when the input is deemed not to be such as likely to not cause a malfunction of the electronic device, based on the value sensed through the illuminance sensor.

When the electronic device is located in the pocket, the electronic device may deactivate the entire area of the display. For example, the electronic device may deactivate the entire area of the display, when the sensed value is within a set range corresponding to being in a pocket. When the sensed value is within the set range corresponding to being in a pocket, the electronic device may identify that the touch input is a false input, and deactivate the entire area of the display. For example, in the case where the visible light pattern of the display has a luminance of about 500nit, when the sensed value is about 300 to 400Lux, the electronic device may deactivate the entire area of the display.

When the touch input does not cause a malfunction of the electronic device, the electronic device may switch the display to the normal mode.

Thus, when the electronic device is not located in the pocket, the electronic device may activate the entire area of the display. For example, the electronic device may activate the entire area of the display, when the sensed value is outside the set range corresponding to being in a pocket. When the sensed value is outside the set range corresponding to being in a pocket, the electronic device may identify that the touch input is normal, and activate the entire area of the display. For example, in the case where the visible light pattern of the display has a luminance of about 500nit, when the sensed value is outside a range of about 300 to 400Lux, the electronic device may be arranged to activate the entire area of the display.

In response to a false input within the pocket being identified in this manner, the electronic device may be switched back to the sleep state to prevent a malfunction (and reduce or current consumption), to ignore the touch input, or display a message indicating a potential malfunction, thereby preventing the malfunction from starting or continuing, and/or inhibiting an additional malfunction.

Further, in the case of a proximity sensor disposed to overlap with the display, emitted light is lost as it penetrates the display, whereas loss caused by the transmittance of the display may be reduced by displaying the visible light pattern on the display.

FIG. 4A is a diagram illustrating an arrangement structure of an illuminance sensor in an electronic device.

Referring to FIG. 4A, an electronic device (e.g., the electronic device 101 in FIG. 1, the processor 120 in FIG. 1, or the electronic device 200 in FIG. 2A) includes a housing 420 (e.g., the first rear cover 240 in FIG. 2A), a light emitter 410 (e.g., an LED), and an illuminance sensor 411 (e.g., the sensor module 176 in FIG. 1, the sensor module 255 in FIG. 2A, the sensor module 255 in FIG. 2B, or the sensor module 255 in FIG. 2C) (e.g., a flicker sensor).

The illuminance sensor 411 may be disposed such that a photo diode (PD) 412 included in the illuminance sensor 411 is disposed in a predetermined position with respect to a hole in the housing 420. For example, the illuminance sensor 411 may be disposed in a direction opposite to a direction in which a display (e.g., the display module 160 in FIG. 1, the sub-display 239 in FIG. 2A, the sub-display 239 in FIG. 2B, or the sub-display 239 in FIG. 2C) is disposed, with respect to the hole in the housing 420. For example, the PD 412 may be disposed such that an angle between a reference line running through one end of the PD 412 and a line connecting the one end of the PD 412 to the farthest position of the boundary of the hole in the housing 420 is X, and an angle between a reference line running through the other end of the PD 412 and a line connecting the other end of the PD 412 to the closest position of the boundary of the hole in the housing 420 is Y. According to an embodiment, the PD 412 may be disposed such that the sum of X and Y is equal to or greater than 60 degrees, and Y is equal to or greater than 0 degrees.

An FOV for the PD/illuminance sensor may be determined in consideration of X, Y, the size of the PD 412, and/or the location of the PD 412 within the light sensor 411.

According to an embodiment, X may be greater than Y, and the display may be disposed in a direction of the angle of X.

As such, an FOV in a desired direction may be secured by rotating a mounting direction of the illuminance sensor 411. For example, as illustrated in FIG. 4B, the illuminance sensor 411 may be disposed such that an FOV is secured in the direction of the display.

FIG. 4B is a diagram illustrating an arrangement structure of an illuminance sensor in an electronic device.

Referring to FIG. 4B, the electronic device may include the sub-display 239 (e.g., the display module 160 in FIG. 1, the sub-display 239 in FIG. 2A, the sub-display 239 in FIG. 2B, or the sub-display 239 in FIG. 2C) disposed in an area of the housing, and the light emitter 410 and the illuminance sensor 411 which are disposed below the hole in the housing.

The illuminance sensor 411 may be disposed in a direction opposite to a direction in which the display 239 is disposed, with respect to the hole in the housing. For example, the illuminance sensor 411 may be disposed in a down-left direction with respect to the hole in the housing, which is opposite to an upright direction in which the display 239 is disposed, with respect to the hole in the housing.

As the illuminance sensor 411 is disposed in the direction opposite to the direction in which the display 239 is disposed, with respect to the hole in the housing, the electronic device may secure a wider FOV 430 in the direction of the display 239.

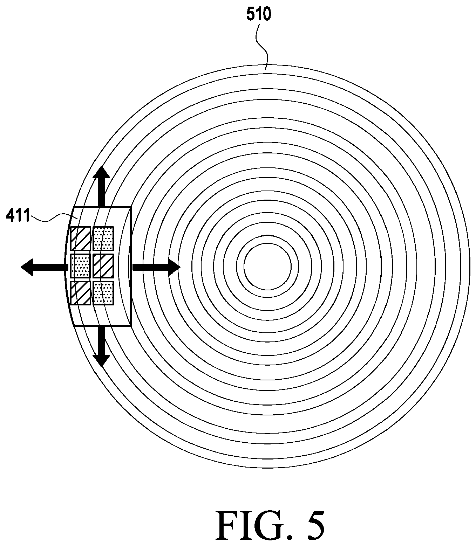

FIG. 5 is a diagram illustrating an arrangement structure of an illuminance sensor in an electronic device.

Referring to FIG. 5, the electronic device (e.g., the electronic device 101 in FIG. 1, the processor 120 in FIG. 1, or the electronic device 200 in FIG. 2A) includes the illuminance sensor 411 (e.g., the sensor module 176 in FIG. 1, the sensor module 255 in FIG. 2A, the sensor module 255 in FIG. 2B, or the sensor module 255 in FIG. 2C) disposed such that an FOV is directed in a direction in which the display (e.g., the display module 160 in FIG. 1, the sub-display 239 in FIG. 2A, the sub-display 239 in FIG. 2B, or the sub-display 239 in FIG. 2C) is disposed.

For example, when the display is disposed on the right side with respect to a hole 510 of the housing (e.g., the first rear cover 240 in FIG. 2A), the illuminance sensor 411 may be disposed on the left side with respect to the center of the hole 510 of the housing.

For example, an upward FOV of the illuminance sensor 411 may be about 30 degrees to about 40 degrees, a downward FOV thereof may be about 30 degrees to about 40 degrees, a left FOV thereof may be about 5 degrees, and a right FOV thereof may be about 45 degrees.

The per-direction light receiving capability of the illuminance sensor 411 may vary based on the FOV of the illuminance sensor 411.

For example, when direct light is 100Lux, light radiated from above or below may be measured to be about 34Lux to 36Lux, and light radiated from the right may be measured to be up to about 49Lux, whereas light radiated from the left may be measured to be about 7Lux.

As such, since the light receiving capability varies with the FOV, the illuminance sensor 411 may be disposed such that the FOV is maximized in the direction in which the display is displayed, to minimize the influence of an external light source and receive light from the display.

This allows for more efficient reception of reflected light of light from the display.

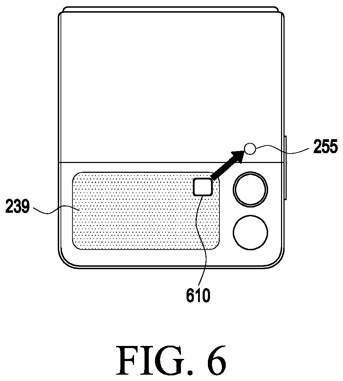

FIG. 6 is a diagram illustrating a method of detecting a malfunction based on display of a visible light pattern in an electronic device.

Referring to FIG. 6, the electronic device (e.g., the electronic device 101 in FIG. 1, the processor 120 in FIG. 1, or the electronic device 200 in FIG. 2A) is arranged to activate a partial area of the display 239 (e.g., the display module 160 in FIG. 1, the sub-display 239 in FIG. 2A, the sub-display 239 in FIG. 2B, or the sub-display 239 in FIG. 2C), when receiving a touch input in the low power mode of the display 239. For example, when receiving a touch input while the display is in the low power mode, the electronic device is arranged to activate only a partial area of the display, rather than the entire area of the display.

The electronic device is arranged to display a visible light pattern 610 on the activated partial area of the display. The electronic device is arranged to activate a partial area out of the entire area of the sub-display 239, including an area closest to the location of the illuminance sensor 255 (e.g., the sensor module 176 in FIG. 1, the sensor module 255 in FIG. 2A, the sensor module 255 in FIG. 2B, or the sensor module 255 in FIG. 2C), and display the visible light pattern 610 in the activated partial area.

The electronic device is arranged to sense reflected light of the visible light pattern 610, using the illuminance sensor 255. For example, when the electronic device is located in a pocket, light of the visible light pattern 610 may be reflected by wrinkles or fabric of the pocket, or reflected light caused by crosstalk may be sensed through the illuminance sensor 255. The electronic device may identify whether the electronic device is located in the pocket, using raw data sensed through the illuminance sensor.

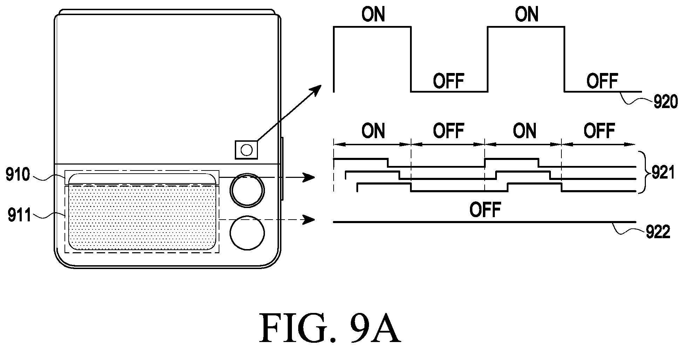

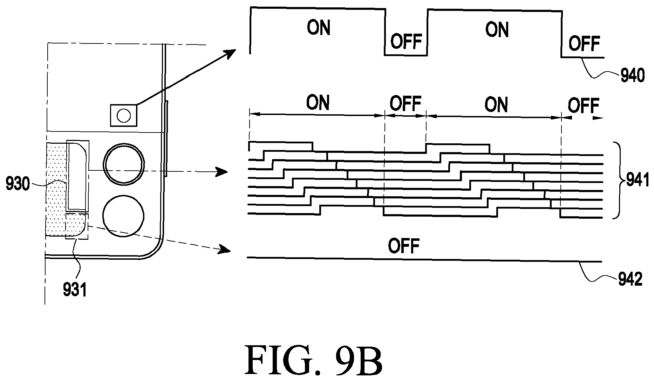

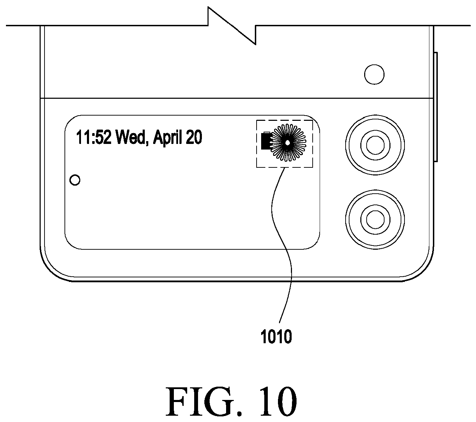

While the visible light pattern 610 is shown as being in the form of a square displayed in an upper right corner of the sub-display 239 in FIG. 6, to which the disclosure is not limited. The visible light pattern 610 may be in the form of a rectangle, as illustrated in FIGS. 9A and 9B, or may be an image or animation, as illustrated in FIG. 10.

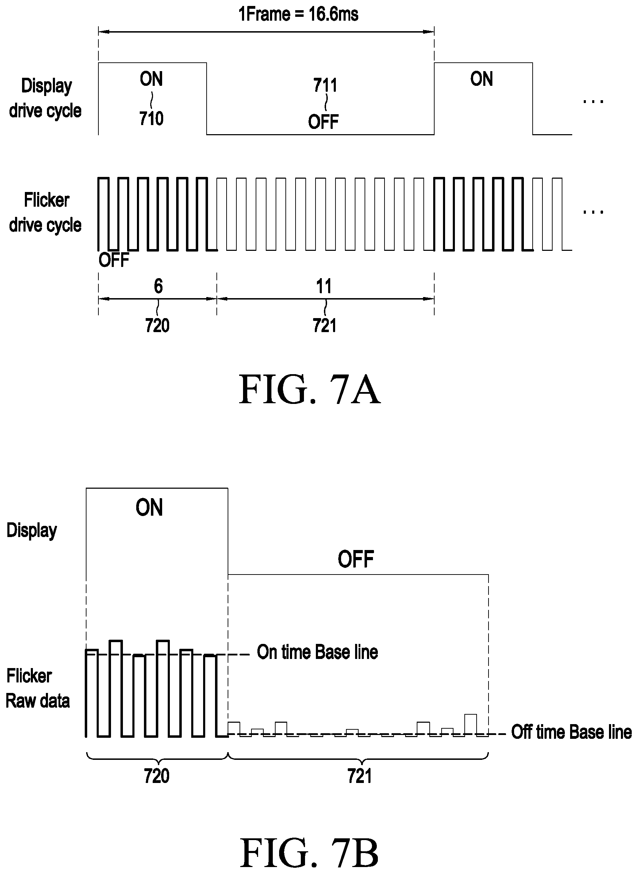

FIG. 7A is a diagram illustrating a drive cycle of an illuminance sensor in an electronic device.

Referring to FIG. 7A, when receiving an input to activate the display (e.g., the display module 160 in FIG. 1, the sub-display 239 in FIG. 2A, the sub-display 239 in FIG. 2B, or the sub-display 239 in FIG. 2C) while the display is in the low power mode, the electronic device (e.g., the electronic device 101 in FIG. 1, the processor 120 in FIG. 1, or the electronic device 200 in FIG. 2A) activate a partial area of the display and display a visible light pattern on the activated partial area. The electronic device may display the visible light pattern by periodically turning the display on 710/off 711. For example, the frequency of the display may be about 60Hz, and a drive cycle for performing one on 710/off 711 operation may thus be 16.6ms.

The electronic device may identify that the electronic device is in a pocket by identifying the intensity and frequency component of light based on raw data sensed by the illuminance sensor (e.g., a flicker sensor) during driving of the display. For example, the illuminance sensor may have a sampling rate of about 1024Hz and identify one raw data point about every 0.0097s.

According to this example, the illuminance sensor may perform sampling 17 times for 16.6ms during which the display performs one on 710/off711 operation.

An on 710 period of the display may vary depending on the luminance of the display. For example, the illuminance sensor may perform sampling 6 times 720 during the on 710 period of the display, and 11 times 721 during an off 711 period of the display.

FIG. 7B is a diagram illustrating a sensing operation of an illuminance sensor in an electronic device.

Referring to FIG. 7B, the electronic device may identify a base line of raw data sampled 6 times 720 by the illuminance sensor during the on period of the display. According to an embodiment, the electronic device may identify a base line of raw data sampled 11 times 721 by the illuminance sensor during the off period of the display.

According to an embodiment, the electronic device may distinguish between on and off conditions of the display by the base line in the on period of the display and the base line in the off period of the display.

The electronic device may identify on and off frequencies of the display, based on the baseline in the on period of the display and the baseline in the off period of the display, and identify whether the sensed light is from the visible light pattern based on the on and off frequencies of the display.

The electronic device may obtain a difference between the baselines by comparing the baseline in the on period of the display with the baseline in the off period of the display, and identify whether the electronic device is in the pocket based on the difference between the baselines. When the electronic device identifies that the electronic device is in the pocket, the electronic device may identify that the touch input is a false input, and maintain the low power mode of the display.

FIG. 8A is a diagram illustrating a visible light pattern in an electronic.

Referring to FIG. 8A, when receiving an input to activate the display (e.g., the display module 160 in FIG. 1, the sub-display 239 in FIG. 2A, the sub-display 239 in FIG. 2B, or the sub-display 239 in FIG. 2C) while the display is in the low power mode, the electronic device (e.g., the electronic device 101 in FIG. 1, the processor 120 in FIG. 1, or the electronic device 200 in FIG. 2A) is arranged to activate a partial area of the display and display a visible light pattern in the activated partial area.

The electronic device is arranged to use RGB data from a light source of the display to increase efficiency in receiving light from the display through the illuminance sensor (e.g., the sensor module 176 in FIG. 1, the sensor module 255 in FIG. 2A, the sensor module 255 in FIG. 2B, or the sensor module 255 in FIG. 2C).

The illuminance sensor includes a photodiode that detects a specific wavelength of RGB in addition to a photodiode of a clear band that spans an entire visible light band.

According to an embodiment, the visible light pattern may change a plurality of colors in sequence during one cycle 810 (1 duty). For example, the visible light pattern may change colors in the order of white 811, red 812, green 813, and blue 814 during one cycle 810 (1 duty). The visible light pattern may include three or fewer display on periods or five or more display on periods. The visible light pattern may include three or fewer colors, and may include duplicate colors.

The electronic device may identify that reflected light is from the emission of the display, not from an external light source by further considering the color of light received through the illuminance sensor as well as the intensity of the light.

The electronic device may determine whether to activate the entire area of the display in response to an input, based on comparing at least one of the luminance or color of the visible light pattern with at least one of the magnitude or color of a value sensed through the illuminance sensor.

The electronic device may display a visible light pattern including combinations of colors as illustrated in FIG. 8B.

FIG. 8B is a diagram illustrating a visible light pattern in an electronic.

Referring to FIG. 8B, the visible light pattern may change a plurality of colors in sequence during one cycle 820 (1 duty). For example, the visible light pattern may change colors in the order of white 821, yellow 822 being a combination of red and green, magenta 823 being a combination of red and blue, and cyan 824 being a combination of red and green during one cycle 820 (1 duty).

The visible light pattern may include three or fewer display on periods or five or more display on periods. The visible light pattern may include three or fewer colors, and may include duplicate colors. The visible light pattern may include two or more of the four colors illustrated in FIG. 8A and the three color combinations illustrated in FIG. 8B.

The electronic device may identify that reflected light is from the emission of the display rather than an external light source by further considering the color of light received through the illuminance sensor as well as the intensity of the light. For example, when the visible light pattern includes a combination of colors, the electronic device may analyze RGB color-specific frequency components of the received light.

The electronic device may determine whether to activate the entire area of the display in response to an input, based on comparing at least one of the luminance or color of the visible light pattern with at least one of the magnitude or color of a value sensed through the illuminance sensor.

FIG. 9A is a diagram illustrating an operation of controlling a drive cycle of an illuminance sensor based on the shape of a visible light pattern in an electronic device.

FIG. 9B is a diagram illustrating an operation of controlling a drive cycle of an illuminance sensor based on the shape of a visible light pattern in an electronic device.

The electronic device (e.g., the electronic device 101 in FIG. 1, the processor 120 in FIG. 1, or the electronic device 200 in FIG. 2A) is arranged to control the periodicity of reflected light sensed through the illuminance sensor (e.g., the sensor module 176 in FIG. 1, the sensor module 255 in FIG. 2A, the sensor module 255 in FIG. 2B, or the sensor module 255 in FIG. 2C) by adjusting a light emitting area of the display (e.g., the display module 160 in FIG. 1, the sub-display 239 in FIG. 2A, the sub-display 239 in FIG. 2B, or the sub-display 239 in FIG. 2C).

For example, an on/off cycle of the illuminance sensor may be controlled by adjusting the light emitting area of the display. The electronic device may adjust a display on/off interval through the shape of the light emitting area, taking into account a display on time based on the luminance of the display. The electronic device may adjust a frequency component of light received by the illuminance sensor to a desired value by adjusting the display on/off interval.

Referring to FIG. 9A, the electronic device may activate only a top area 910 of the display close to the illuminance sensor, and display a visible light pattern in the activated top area 910. For example, the activated top area 910 may include three lines. A remaining area 911 of the display, distinct from the activated top area 910 may be inactive.

The electronic device may sequentially turn on and off pixels in rows included in the top area 910 of the display in order of the rows, as indicated by reference numeral 921, and maintain pixels off in rows included in the remaining area 911 except for the activated top area 910, as indicated by reference numeral 922.

The electronic device may control an on/off frequency 920 of the illuminance sensor based on an on/off period 921 of the pixels of the rows included in the top area 910 of the display.

The electronic device may turn on the illuminance sensor during a period in which at least one of three rows of pixels included in the top area of the display 910 is on, and turn off the illuminance sensor during a period in which all of the three rows of pixels included in the top area of the display 910 are off.

Referring to FIG. 9B, the electronic device may activate only a top right area 930 of the display close to the illuminance sensor, and display a visible light pattern in the activated top area 930. For example, the activated top area 930 may include eight lines. A bottom right area 931 of the display distinct from the activated top right area 930 may be inactive.

The electronic device may sequentially turn on and off pixels in rows included in the top right area 930 of the display in order of the rows, as indicated by reference numeral 941, and maintain pixels off in rows included in the bottom right area 931 except for the activated upper right area 910, as indicated by reference numeral 942.

The electronic device may control an on/off frequency 940 of the illuminance sensor based on an on/off period 941 of the rows of pixels included in the top right area 930 of the display.

The electronic device may turn on the illuminance sensor during a period in which at least one of eight rows of pixels included in the top right area 930 of the display is on, and turn off the illuminance sensor during a period in which all of the eight rows of pixels included in the top right area 930 of the display are off.

An on time of the illuminance sensor in FIG. 9B in which a larger number of rows are included in the activated area may be longer than an on time of the illuminance sensor in FIG. 9A in which a smaller number of rows are included in the activated area. According to an embodiment, an off time of the illuminance sensor in FIG. 9B may be shorter than an off time of the illuminance sensor in FIG. 9A.

As such, adjustment of the on/off time of the visible light pattern may allow for more efficient identification that a value sensed by the illuminance sensor is from the visible light pattern rather than an external light source.

FIG. 10 is a diagram illustrating the shape of a visible light pattern in an electronic device.

When receiving a touch input while the display (e.g., the display module 160 in FIG. 1, the sub-display 239 in FIG. 2A, the sub-display 239 in FIG. 2B, or the sub-display 239 in FIG. 2C) is in the low power mode, the electronic device (e.g., the electronic device 101 in FIG. 1, the processor 120 in FIG. 1, or the electronic device 200 in FIG. 2A) is arranged to display a visible light pattern at a location close to the illuminance sensor (e.g., the sensor module 176 in FIG. 1, the sensor module 255 in FIG. 2A, the sensor module 255 in FIG. 2B, or the sensor module 255 in FIG. 2C). For example, the visible light pattern may include a single color of light, and colors may change periodically based on a sequence.

The visible light pattern may include an image or animation 1010 as illustrated in FIG. 10, not limited to a single color of light.

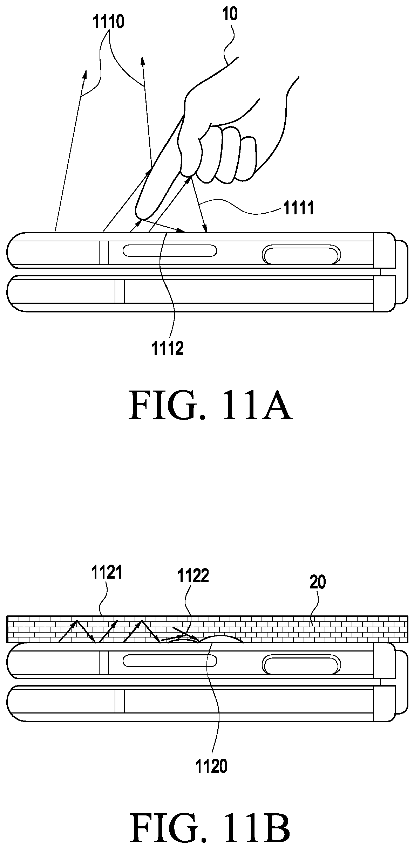

FIG. 11A is a diagram illustrating the amount of reflected light detected in an external space around an electronic device. For example, FIG. 11A is a diagram illustrating reflected light from a hand intentionally touching an electronic device from a position surrounded by external space.

Referring to FIG. 11A, when receiving a touch input while the display (e.g., the display module 160 in FIG. 1, the sub-display 239 in FIG. 2A, the sub-display 239 in FIG. 2B, or the sub-display 239 in FIG. 2C) is in the low power mode, the electronic device (e.g., the electronic device 101 in FIG. 1, the processor 120 in FIG. 1, or the electronic device 200 in FIG. 2A) is arranged to display a visible light pattern in a partial area of the display.

When the visible light pattern is displayed in an external space, most 1110 of light from the visible light pattern may spread to the external space. The amount of light 1111 reflected from a hand 10 touching the display and the amount of light 1112 to which crosstalk occurs may be small, resulting in a lower intensity of light received by the illuminance sensor (e.g., the sensor module 176 in FIG. 1, the sensor module 255 in FIG. 2A, sensor module 255 in FIG. 2B, or the sensor module 255 in FIG. 2C). When the display is touched by the hand 10 from a position surrounded by external space, a value sensed by the illuminance sensor may be about 16 to about 32Lux.

FIG. 11B is a diagram illustrating the amount of reflected light detected in an electronic device which is within a pocket. For example, FIG. 11B is a diagram illustrating reflected light in a pocket.

Referring to FIG. 11A, when receiving a touch input while the display is in the low power mode, the electronic device may display a visible light pattern in a partial area of the display.

When the visible light pattern is displayed in a trouser or similar clothing pocket, light from the visible light pattern may be reflected 1121 from fabric 20, and there may be a large amount of light 1122 to which crosstalk occurs because a step resulting from an air gap 1120 caused by gaps and creases on the fabric 20 prevents much light from spreading.

According to an embodiment, the intensity of light received by the illuminance sensor may be high in the pocket. For example, when the visible light pattern is displayed on the display due to a false input in the pocket, a value sensed by the illuminance sensor may be about 300Lux or more.

According to an embodiment, when the same visible light pattem is displayed, analog to digital converter (ADC) values sensed by the illuminance sensor in pockets of different fabrics may be given as illustrated in Table 1 below.

**[Table 1]**

| Fabric | Jeans | Jeans (black) | Cotton trousers (white) | Cotton trousers (beige) | Cotton trousers (black) |
|---|---|---|---|---|---|
| Illuminance sensor ADC(Lux) | 386 | 332 | 398 | 376 | 314 |

Referring to Table 1, depending on the type of fabric, jeans with less dense fibers may exhibit greater internal crosstalk than cotton trousers because the former has a larger air gap than the latter. Although a higher sensed value of reflected light is measured in lighter colored trousers, the overall deviation is not significant, and a light intensity large enough to measure a frequency component may be sensed.

As such, when the display is driven by an unintentional false input in such an environment as in a pocket or bag where a user is not actually using the electronic device, the false input may be identified, and thus a malfunction may be prevented. Malfunction-incurred current consumption of the electronic device may thus be reduced by identifying a false input and thus maintaining the display in the low power mode.

An electronic device (e.g., the electronic device 101 in FIG. 1 or the electronic device 200 in FIG. 2) includes a display (e.g., the display module 160 in FIG. 1, the sub-display 239 in FIG. 2A, the sub-display 239 in FIG. 2B, or the sub-display 239 in FIG. 2C), an illuminance sensor (e.g., the sensor module 176 in FIG. 1, the sensor module 255 in FIG. 2A, the sensor module 255 in FIG. 2B, or the sensor module 255 in FIG. 2C), at least one processor (e.g., the processor 120 in FIG. 1), and memory (e.g., the memory 130 in FIG. 1) storing instructions that, when executed by the at least one processor individually or collectively, cause the electronic device to perform operations.
one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1^{st}" and "2^{nd}", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Embodiments of the disclosure may be implemented as software (e.g., the program 120) including one or more instructions that are stored in a storage medium (e.g., the internal memory 136 or the external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to embodiments, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101, 200) comprising:
a display (160, 239);
an illuminance sensor (176, 255);
a processor (120); and
memory (130) storing instructions (140) that, when executed by the at least one processor individually or collectively, cause the electronic device (101, 200) to:
display a predefined image on the display (160, 239), based on receiving a touch input to the display (160,239), in a state that the display (160, 239) is in a low power mode, and
based on a value sensed through the illuminance sensor (176, 255) after displaying the predefined image, determine whether to switch a mode of the display (160, 239) to a normal mode,
wherein the illuminance sensor (176, 255) is configured to sense light of the predefined image displayed on the display (160, 239) reflected from an object,
and wherein the sensed value is related to reflected light of the predefined image displayed on the display.

2. The electronic device (101, 200) of claim 1, wherein the instructions (140) cause the electronic device (101, 200), based on the value sensed through the illuminance sensor (176, 255):
to ignore the touch input when the touch input causes a malfunction of the electronic device (101, 200); and
to switch the display (160, 239) to the normal mode when the touch input does not cause the malfunction of the electronic device (101, 200).

3. The electronic device (101, 200) of claim 1 or 2, wherein the predefined image is displayed only in a partial area of the display (160, 239), and/or wherein the predefined image includes a plurality of image frames having a specific pattern.

4. The electronic device (101, 200) of any one of claims 1 to 3, further comprising a camera (180, 253),
wherein the illuminance sensor (176, 255) includes a flicker sensor disposed around the camera (180, 253).

5. The electronic device (101, 200) of any one of claims 1 to 4, wherein the illuminance sensor (176, 255) is disposed at a position at which the illuminance sensor (176, 255) is capable of receiving light from an image displayed on the display (160, 239).

6. The electronic device (101, 200) of any one of claims 1 to 5, wherein the instructions (140) cause the electronic device (101, 200) to turn on the illuminance sensor (176, 255) while the predefined image is displayed on the display (160, 239), and turn off the illuminance sensor (176, 255) while the predefined image is not displayed on the display (160, 239).

7. The electronic device (101, 200) of any one of claims 1 to 6, wherein the instructions (140) cause the electronic device (101, 200) to determine whether to switch the display (160, 239) to the normal mode, based on a difference between a baseline of a sensed value in a period during which the illuminance sensor (176, 255) is on and a baseline of a sensed value in a period during which the illuminance sensor (176, 255) is off.

8. The electronic device (101, 200) of any one of claims 1 to 7, being a foldable device, and
wherein the display (160, 239) and the illuminance sensor (176, 255) are disposed in an area visually exposed outside of the electronic device (101, 200), when the electronic device (101, 200) is in a folded state.

9. A method of controlling an electronic device, comprising:
displaying a predefined image on a display of the electronic device, based on receiving a touch input to the display, in a state that the display is in a low power mode (310); and
determining whether to switch a mode of the display to a normal mode, based on a value sensed through an illuminance sensor of the electronic device after displaying the predefined image (operation 320),
wherein the illuminance sensor (176, 255) is configured to sense light of the predefined image displayed on the display (160, 239) reflected from an object, and
wherein the sensed value is related to reflected light of the predefined image displayed on the display.

10. The method of claim 9, further comprising ignoring the touch input based on the value sensed through the illuminance sensor when the touch input causes a malfunction of the electronic device, and switching the display to the normal mode based on the value sensed through the illuminance sensor when the touch input does not cause the malfunction of the electronic device.

11. The method of claim 9 or 10, wherein displaying a predefined image comprises displaying the predefined image in only a partial area of the display, and/or displaying a plurality of image frames having a specific pattern.

12. The method of any one of claims 9 to 11, wherein the determining whether to switch the mode of the display to a normal mode comprises turning on the illuminance sensor while the predefined image is displayed on the display, and turning off the illuminance sensor while the predefined image is not displayed on the display.

13. The method of any one of claims 9 to 12, wherein the determining whether to switch the mode of the display to a normal mode is determined based on a difference between a baseline of a sensed value in a period during which the illuminance sensor is on and a baseline of a sensed value in a period during which the illuminance sensor is off.

## Patentansprüche

1. Elektronische Vorrichtung (101, 200), umfassend:
eine Anzeige (160, 239);
einen Beleuchtungssensor (176, 255);
einen Prozessor (120); und
Speicher (130), der Anweisungen (140) speichert, die, wenn durch den zumindest einen Prozessor einzeln oder kollektiv ausgeführt, die elektronische Vorrichtung (101, 200) zu Folgendem veranlassen:
Anzeigen eines vordefinierten Bildes auf der Anzeige (160, 239) basierend auf dem Empfangen einer Berührungseingabe auf der Anzeige (160, 239) in einem Zustand, dass die Anzeige (160, 239) in einem Niedrigleistungsmodus ist, und
basierend auf einem Wert, der durch den Beleuchtungssensor (176, 255) nach dem Anzeigen des vordefinierten Bildes erfasst wird, Bestimmen, ob ein Modus der Anzeige (160, 239) in einen Normalmodus zu schalten ist,
wobei der Beleuchtungssensor (176, 255) dazu konfiguriert ist, Licht des vordefinierten Bildes zu erfassen, das auf der Anzeige (160, 239) angezeigt wird, das von einem Objekt reflektiert wird,
und wobei der erfasste Wert mit reflektiertem Licht des vordefinierten Bildes, das auf der Anzeige angezeigt wird, in Beziehung steht.

2. Elektronische Vorrichtung (101, 200) nach Anspruch 1, wobei die Anweisungen (140) die elektronische Vorrichtung (101, 200) basierend auf dem Wert, der durch den Beleuchtungssensor (176, 255) erfasst wird, zu Folgendem veranlassen:
Ignorieren der Berührungseingabe, wenn die Berührungseingabe eine Fehlfunktion der elektronischen Vorrichtung (101, 200) veranlasst; und
Schalten der Anzeige (160, 239) in den Normalmodus, wenn die Berührungseingabe keine Fehlfunktion der elektronischen Vorrichtung (101, 200) veranlasst.

3. Elektronische Vorrichtung (101, 200) nach Anspruch 1 oder 2, wobei das vordefinierte Bild nur in einem Teilbereich der Anzeige (160, 239) angezeigt wird und/oder wobei das vordefinierte Bild eine Vielzahl von Bildrahmen mit einem spezifischen Muster beinhaltet.

4. Elektronische Vorrichtung (101, 200) nach einem der Ansprüche 1 bis 3, ferner umfassend eine Kamera (180, 253),
wobei der Beleuchtungssensor (176, 255) einen Flimmersensor beinhaltet, der um die Kamera (180, 253) angeordnet ist.

5. Elektronische Vorrichtung (101, 200) nach einem der Ansprüche 1 bis 4, wobei der Beleuchtungssensor (176, 255) an einer Position angeordnet ist, an welcher der Beleuchtungssensor (176, 255) in der Lage ist, Licht von einem Bild zu empfangen, das auf der Anzeige (160, 239) angezeigt wird.

6. Elektronische Vorrichtung (101, 200) nach einem der Ansprüche 1 bis 5, wobei die Anweisungen (140) die elektronische Vorrichtung (101, 200) dazu veranlassen, den Beleuchtungssensor (176, 255) einzuschalten, während das vordefinierte Bild auf der Anzeige (160, 239) angezeigt wird, und den Beleuchtungssensor (176, 255) auszuschalten, während das vordefinierte Bild nicht auf der Anzeige (160, 239) angezeigt wird.

7. Elektronische Vorrichtung (101, 200) nach einem der Ansprüche 1 bis 6, wobei die Anweisungen (140) die elektronische Vorrichtung (101, 200) dazu veranlassen, basierend auf einer Differenz zwischen einer Basislinie eines erfassten Wertes in einem Zeitraum, während dessen der Beleuchtungssensor (176, 255) ein ist, und einer Basislinie eines erfassten Wertes in einem Zeitraum, während dessen der Beleuchtungssensor (176, 255) aus ist, zu bestimmen, ob die Anzeige (160, 239) in den Normalmodus zu schalten ist.

8. Elektronische Vorrichtung (101, 200) nach einem der Ansprüche 1 bis 7, die eine faltbare Vorrichtung ist, und
wobei die Anzeige (160, 239) und der Beleuchtungssensor (176, 255) in einem Bereich angeordnet sind, der visuell außerhalb der elektronischen Vorrichtung (101, 200) freigelegt ist, wenn die elektronische Vorrichtung (101, 200) in einem gefalteten Zustand ist.

9. Verfahren zum Steuern einer elektronischen Vorrichtung, umfassend:
Anzeigen eines vordefinierten Bildes auf einer Anzeige der elektronischen Vorrichtung basierend auf dem Empfangen einer Berührungseingabe auf der Anzeige in einem Zustand, dass die Anzeige in einem Niedrigleistungsmodus (310) ist; und
Bestimmen, ob ein Modus der Anzeige in einen Normalmodus zu schalten ist, basierend auf einem Wert, der durch einen Beleuchtungssensor der elektronischen Vorrichtung nach dem Anzeigen des vordefinierten Bildes (Vorgang 320) erfasst wird,
wobei der Beleuchtungssensor (176, 255) dazu konfiguriert ist, Licht des vordefinierten Bildes zu erfassen, das auf der Anzeige (160, 239) angezeigt wird, das von einem Objekt reflektiert wird, und
wobei der erfasste Wert mit reflektiertem Licht des vordefinierten Bildes, das auf der Anzeige angezeigt wird, in Beziehung steht.

10. Verfahren nach Anspruch 9, ferner umfassend Ignorieren der Berührungseingabe basierend auf dem Wert, der durch den Beleuchtungssensor erfasst wird, wenn die Berührungseingabe eine Fehlfunktion der elektronischen Vorrichtung veranlasst, und Schalten der Anzeige in den Normalmodus basierend auf dem Wert, der durch den Beleuchtungssensor erfasst wird, wenn die Berührungseingabe keine Fehlfunktion der elektronischen Vorrichtung veranlasst.

11. Verfahren nach Anspruch 9 oder 10, wobei das Anzeigen eines vordefinierten Bildes Anzeigen des vordefinierten Bildes in nur einem Teilbereich der Anzeige und/oder Anzeigen einer Vielzahl von Bildrahmen mit einem spezifischen Muster umfasst.

12. Verfahren nach einem der Ansprüche 9 bis 11, wobei das Bestimmen, ob der Modus der Anzeige in einen Normalmodus zu schalten ist, Einschalten des Beleuchtungssensors, während das vordefinierte Bild auf der Anzeige angezeigt wird, und Ausschalten des Beleuchtungssensors, während das vordefinierte Bild nicht auf der Anzeige angezeigt wird, umfasst.

13. Verfahren nach einem der Ansprüche 9 bis 12, wobei das Bestimmen, ob der Modus der Anzeige in einen Normalmodus zu schalten ist, basierend auf einer Differenz zwischen einer Basislinie eines erfassten Wertes in einem Zeitraum, während dessen der Beleuchtungssensor ein ist, und einer Basislinie eines erfassten Wertes in einem Zeitraum, während dessen der Beleuchtungssensor aus ist, bestimmt wird.

## Revendications

1. Dispositif électronique (101, 200) comprenant :
un dispositif d'affichage (160, 239) ;
un capteur d'éclairement (176, 255) ;
un processeur (120) ; et
une mémoire (130) stockant des instructions (140) qui, lorsqu'elles sont exécutées individuellement ou collectivement par l'au moins un processeur, amènent le dispositif électronique (101, 200) à :
afficher une image prédéfinie sur le dispositif d'affichage (160, 239), sur la base de la réception d'une entrée tactile sur le dispositif d'affichage (160, 239), dans un état où le dispositif d'affichage (160, 239) est dans un mode faible puissance, et
sur la base d'une valeur détectée par le capteur d'éclairement (176, 255) après l'affichage de l'image prédéfinie, déterminer si le mode du dispositif d'affichage (160, 239) doit être passé dans un mode normal,
ledit capteur d'éclairement (176, 255) étant configuré pour détecter la lumière de l'image prédéfinie affichée sur le dispositif d'affichage (160, 239) réfléchie par un objet,
et ladite valeur détectée étant liée à la lumière réfléchie de l'image prédéfinie affichée sur le dispositif d'affichage.

2. Dispositif électronique (101, 200) de la revendication 1, lesdites instructions (140) amenant le dispositif électronique (101, 200), sur la base de la valeur détectée par le capteur d'éclairement (176, 255) à :
ne pas tenir compte de l'entrée tactile lorsque l'entrée tactile entraîne un dysfonctionnement du dispositif électronique (101, 200) ; et
faire passer le dispositif d'affichage (160, 239) dans le mode normal lorsque l'entrée tactile n'entraîne pas de dysfonctionnement du dispositif électronique (101, 200).

3. Dispositif électronique (101, 200) de la revendication 1 ou 2, ladite image prédéfinie étant affichée uniquement dans une zone partielle du dispositif d'affichage (160, 239), et/ou ladite image prédéfinie comprenant une pluralité de trames d'image possédant un motif spécifique.

4. Dispositif électronique (101, 200) de l'une quelconque des revendications 1 à 3, comprenant en outre une caméra (180, 253),
ledit capteur d'éclairement (176, 255) comprenant un capteur de scintillement disposé autour de la caméra (180, 253).

5. Dispositif électronique (101, 200) de l'une quelconque des revendications 1 à 4, ledit capteur d'éclairement (176, 255) étant disposé au niveau d'une position à laquelle le capteur d'éclairement (176, 255) est capable de recevoir de la lumière en provenance d'une image affichée sur le dispositif d'affichage (160, 239).

6. Dispositif électronique (101, 200) de l'une quelconque des revendications 1 à 5, lesdites instructions (140) amenant le dispositif électronique (101, 200) à mettre sous tension le capteur d'éclairement (176, 255) pendant que l'image prédéfinie est affichée sur le dispositif d'affichage (160, 239), et à mettre hors tension le capteur d'éclairement (176, 255) pendant que l'image prédéfinie n'est pas affichée sur le dispositif d'affichage (160, 239).

7. Dispositif électronique (101, 200) de l'une quelconque des revendications 1 à 6, lesdites instructions (140) amenant le dispositif électronique (101, 200) à déterminer si le dispositif d'affichage (160, 239) doit être passé dans le mode normal, sur la base d'une différence entre une base de référence d'une valeur détectée dans une période pendant laquelle le capteur d'éclairement (176, 255) est sous tension et une base de référence d'une valeur détectée dans une période durant laquelle le capteur d'éclairement (176, 255) est hors tension.

8. Dispositif électronique (101, 200) de l'une quelconque des revendications 1 à 7, étant un dispositif pliable, et ledit dispositif d'affichage (160, 239) et ledit capteur d'éclairement (176, 255) étant disposés dans une zone exposée visuellement à l'extérieur du dispositif électronique (101, 200), lorsque le dispositif électronique (101, 200) est dans un état plié.

9. Procédé de commande d'un dispositif électronique, comprenant :
l'affichage d'une image prédéfinie sur un dispositif d'affichage du dispositif électronique, sur la base de la réception d'une entrée tactile sur le dispositif d'affichage, dans un état où le dispositif d'affichage est dans un mode faible puissance (310) ;
et
la détermination pour savoir si un mode du dispositif d'affichage doit être passé dans un mode normal, sur la base d'une valeur détectée par un capteur d'éclairement du dispositif électronique après l'affichage de l'image prédéfinie (opération 320), ledit capteur d'éclairement (176, 255) étant configuré pour détecter la lumière de l'image prédéfinie affichée sur le dispositif d'affichage (160, 239) réfléchie par un objet, et ladite valeur détectée étant liée à la lumière réfléchie de l'image prédéfinie affichée sur le dispositif d'affichage.

10. Procédé de la revendication 9, comprenant en outre la non prise en compte de l'entrée tactile sur la base de la valeur détectée par le capteur d'éclairement lorsque l'entrée tactile entraîne un dysfonctionnement du dispositif électronique, et le passage du dispositif d'affichage dans le mode normal sur la base de la valeur détectée par le capteur d'éclairement lorsque l'entrée tactile n'entraîne pas de dysfonctionnement du dispositif électronique.

11. Procédé de la revendication 9 ou 10, ledit affichage d'une image prédéfinie comprenant l'affichage de l'image prédéfinie dans seulement une zone partielle du dispositif d'affichage, et/ou l'affichage d'une pluralité de trames d'image possédant un motif spécifique.

12. Procédé de l'une quelconque des revendications 9 à 11, ladite détermination pour savoir si le mode du dispositif d'affichage doit être passé dans un mode normal comprenant la mise sous tension du capteur d'éclairement pendant que l'image prédéfinie est affichée sur le dispositif d'affichage, et la mise hors tension du capteur d'éclairement pendant que l'image prédéfinie n'est pas affichée sur le dispositif d'affichage.

13. Procédé de l'une quelconque des revendications 9 à 12, ladite détermination pour savoir si le mode de l'affichage doit être passé dans un mode normal étant déterminée sur la base d'une différence entre une base de référence d'une valeur détectée dans une période durant laquelle le capteur d'éclairement est sous tension et une base de référence d'une valeur détectée dans une période durant laquelle le capteur d'éclairement est hors tension.
